# EUROPEAN PATENT APPLICATION

(11) **EP 4 553 992 A1**
(43) Date of publication of application: **14.05.2025**
(21) Application number: 23924534.3
(22) Date of filing: 27.02.2023
(51) Int. Cl.: H01M 50/534, H01M 50/536, H01M 50/543

(54) **BATTERY CELL, BATTERY AND ELECTRICAL APPARATUS**

(71) Applicant: Contemporary Amperex Technology (Hong Kong) Limited, Central, Central And Western District (HK)
(72) Inventor: FANG, Cheng, Ningde, Fujian 352100 (CN); YANG, Guozhong, Ningde, Fujian 352100 (CN); ZHAN, Guoyin, Ningde, Fujian 352100 (CN); CONG, Yan, Ningde, Fujian 352100 (CN); LAI, Rongcai, Ningde, Fujian 352100 (CN); JIAO, Chenghui, Ningde, Fujian 352100 (CN); KE, Pengfei, Ningde, Fujian 352100 (CN); NI, Bingxing, Ningde, Fujian 352100 (CN)
(74) Representative: Kraus & Lederer PartGmbB
(86) International application number: PCT/CN2023/078504
(87) International publication number: WO 2024/178553

(57) **Abstract**

A battery cell (20), a battery (100), and an electrical apparatus. The battery cell (20) comprises a casing assembly (21), an electrode assembly (22), and a current collecting member (23). The casing assembly (21) comprises an electrode lead-out part (211) used for inputting or outputting electric energy. The electrode assembly (22) is accommodated in the casing assembly (21), and the electrode assembly (22) comprises a main body part (221) and a tab (222), the tab (222) being connected to the main body part (221), and the tab (222) and the electrode lead-out part (211) being made of different materials. The current collecting member (23) comprises a first connecting part (231) made of the same material as the electrode lead-out part (211) and a second connecting part (232) made of the same material as the tab (222), the first connecting part (231) being connected to the second connecting part (232), the first connecting part (231) being welded to the electrode lead-out part (211), and the second connecting part (232) being welded to the tab (222).

## Description

### Technical Field

The present disclosure relates to the field of battery technology, in particular to a battery cell, a battery, and an electrical equipment (electrical apparatus).

### Background Art

In recent years, new energy vehicles have made significant progress. In the field of electric vehicles, power batteries play an irreplaceable and important role as the power source of electric vehicles. With the vigorous promotion of new energy vehicles, the demand for power battery products is also increasing. As a core component of new energy vehicles, batteries have high requirements in terms of use reliability. The shell of a battery cell is usually equipped with a current collector component, which connects the electrode assembly and the shell to achieve the input or output of electrical energy of the battery cell. However, existing battery cells often experience electrolyte leakage during use, resulting in poor reliability of the battery cell.

### Summary

The embodiments of the present disclosure provide a battery cell, a battery, and an electrical equipment, which can effectively improve the reliability of the battery cell.

In the first aspect, the embodiments of the present disclosure provide a battery cell comprising a shell assembly, an electrode assembly, and a current collector component, wherein the shell assembly comprises an electrode lead-out part for inputting or outputting electrical energy; the electrode assembly is accommodated inside the shell assembly; the electrode assembly comprises a main body part and a tab, wherein the tab is connected to the main body part, and a material of the tab is different from that of the electrode lead-out part; and the current collector component is arranged inside the shell assembly, and comprises a first connecting part made of the same material as the electrode lead-out part and a second connecting part made of the same material as the tab, wherein the first connecting part is connected to the second connecting part, the first connecting part is welded to the electrode lead-out part, and the second connecting part is welded to the tab.

In the above technical solution, the current collector component is set as a first connecting part and a second connecting part that are mutually connected. The first connecting part is welded to the electrode lead-out part, and the second connecting part is welded to the tab to achieve electrical connection between the electrode assembly and the electrode lead-out part, thereby enabling input or output of electrical energy to the battery cell. By setting the material of the first connecting part to be the same as that of the electrode lead-out part of the shell assembly and the material of the second connecting part to be the same as that of the tab, this structure of the battery cell is convenient for welding connection between the current collector component and the electrode lead-out part, as well as between the current collector component and the tab, which is conducive to reducing the assembly difficulty between the current collector component and the electrode lead-out part of the shell assembly and between the current collector component and the tab of the electrode assembly, so as to improve the assembly efficiency of battery cells. On the other hand, it can achieve mutual welding of the same material between the current collector component and the electrode lead-out part of the shell assembly, so as to reduce the phenomenon of different melting points and thermal expansion coefficients caused by welding the current collector component and the electrode lead-out part that are made of different materials. This can reduce the occurrence of welding cracks between the current collector component and the electrode lead-out part, which is conducive to reducing the risk of electrolyte leakage of battery cells and effectively improving the reliability of battery cells.

In some embodiments, the current collector component is disposed between the main body part and the electrode lead-out part along a first direction, wherein along the first direction, the first connecting part is stacked with the second connecting part, and the first connecting part is located on a side of the second connecting part facing the electrode lead-out part.

In the above technical solution, by stacking the first connecting part and second connecting part of the current collector component along the first direction between the main body part and the electrode lead-out part, and setting the first connecting part facing the electrode lead-out part, it is convenient for the first connecting part of the current collector component to be welded to the electrode lead-out part of the shell assembly, which is conducive to reducing the assembly difficulty between the current collector component and the electrode lead-out part and improving the assembly efficiency of the battery cell.

In some embodiments, along the first direction, the tab is arranged on a side of the main body part facing the second connecting part.

In the above technical solution, by setting the tab to be located on one side of the main body part facing the second connecting part in the first direction, the tab and the second connecting part are arranged facing each other in the first direction, which facilitates the mutual welding between the second connecting part of the current collector component and the tab of the electrode assembly, and helps to reduce the assembly difficulty between the current collector component and the tab.

In some embodiments, along the first direction, the second connecting part has a connecting area that is not covered by the first connecting part, and the connecting area is welded to the tab.

In the above technical solution, the area of the second connecting part that is not covered by the first connecting part in the first direction forms a connecting area for welding with the tab, that is, the area of the second connecting part used for welding with the tab is not blocked by the first connecting part, so that when welding the second connecting part and the tab, the welding heat only needs to pass through the connecting area of the second connecting part to complete the welding connection between the first connecting part and the tab, thereby reducing the welding difficulty between the current collector component and the tab on the one hand, and on the other hand, making it unnecessary to weld the first connecting part and the tab after welding heat passes through the first connecting part, thereby shortening the transfer path of welding heat, which is conducive to improving the welding quality and welding efficiency between the first connecting part and the tab.

In some embodiments, the first connecting part is provided with a first through hole, wherein the first through hole penetrates through both sides of the first connecting part in the first direction, and the second connecting part forms the connecting area corresponding to an area of the first through hole.

In the above technical solution, first through hole penetrating through both sides of the first connecting part is provided on the first connecting part, to avoid the second connecting part through the first through hole, thereby achieving a connecting area of the second connecting part that is not covered by the first connecting part. The structure is simple and easy to implement.

In some embodiments, the connecting area is provided with a second through hole communicated with the first through hole, wherein the second through hole penetrates through both sides of the second connecting part in the first direction, and an aperture of the second through hole is smaller than that of the first through hole.

In the above technical solution, by setting a second through hole that is communicated with the first through hole in the connecting area of the second connecting part, the first through hole and the second through hole can cooperate to form a channel for the electrolyte to pass through, so that the electrolyte can enter the electrode assembly through the first through hole and the second through hole, which is conducive to improving the wetting effect of the electrode assembly and thereby enhancing the use performance of the battery cell. In addition, by setting the aperture of the second through hole to be smaller than that of the first through hole, the area where the second through hole is not provided in the connecting area can be welded to the tab, making it easier for the second connecting part to be welded to the tab.

In some embodiments, the outer peripheral surface of the first connecting part is flush with the outer peripheral surface of the second connecting part.

In the above technical solution, by setting the outer peripheral surface of the first connecting part and the outer peripheral surface of the second connecting part to be flush with each other, the structure of the current collector component is made more regular, which facilitates the installation of the current collector component and the welding connection between the current collector component and the electrode lead-out part and the tab, and can reduce the risk of interference between the current collector component and other structures of the battery cell.

In some embodiments, the connecting area surrounds the outer side of the projection of the first connecting part along the first direction on the second connecting part.

In the above technical solution, the connecting area is set to surround the outer side of the projection of the first connecting part along the first direction on the second connecting part, so that the current collector component has a structure where the edge of the second connecting part exceeds the edge of the first connecting part, so as to achieve avoidance of the first connecting part to the second connecting part, thereby achieving a connecting area of the second connecting part that is not covered by the first connecting part. The structure is simple and easy to implement.

In some embodiments, the first connecting part is provided with a first through hole that passes through both sides of the first connecting part in the first direction, and the second connecting part is provided with a second through hole that passes through both sides of the second connecting part in the first direction, wherein the first through hole is communicated with the second through hole.

In the above technical solution, by setting a first through hole on the first connecting part and a second through hole on the second connecting part, and communicating the first through hole with the second through hole, the first through hole and the second through hole can cooperate to form a channel for the electrolyte to pass through, so that the electrolyte can enter the electrode assembly through the first through hole and the second through hole, which is conducive to improving the wetting effect of the electrode assembly and thereby enhancing the use performance of the battery cell.

In some embodiments, the first through hole and the second through hole are coaxially arranged and have the same radius.

In the above technical solution, by setting the first through hole and the second through hole to a coaxial and equal radius structure, it is possible to simultaneously process the first through hole and the second through hole on the first connecting part and the second connecting part after stacking them, without the need to process the first through hole and the second through hole separately on the first connecting part and the second connecting part and then stack the first connecting part and the second connecting part. This can optimize the processing technology and production cycle of the current collector component, reduce the processing difficulty, and improve the production efficiency of the current collector component.

In some embodiments, both the first connecting part and the second connecting part are disk structures, and the first connecting part and the second connecting part are coaxially arranged.

In the above technical solution, by setting the first connecting part and the second connecting part to be coaxial with each other, the structure of the current collector component is made more regular, which facilitates the installation of the current collector component and is conducive to saving the occupied space of the current collector component in the shell assembly, thus improving the utilization rate of the internal space of the battery cell.

In some embodiments, the current collector component is disposed between the main body part and the electrode lead-out part along the first direction; the first connecting part surrounds an outer side of the second connecting part, and an inner peripheral surface of the first connecting part is connected to an outer peripheral surface of the second connecting part; or the second connecting part surrounds an outer side of the first connecting part, and an inner peripheral surface of the second connecting part is connected to an outer peripheral surface of the first connecting part.

In the above technical solution, by setting the first connecting part and the second connecting part of the current collector component in a mutually surrounding structure, that is, the first connecting part surrounds the outer side of the second connecting part, or the second connecting part surrounds the outer side of the first connecting part, the current collector component using this structure can save the occupied space of the current collector component in the first direction, thereby effectively improving the internal space utilization rate of the battery cell and increasing the energy density of the battery cell.

In some embodiments, the first connecting part is welded to the second connecting part to form a first welding mark, and the first connecting part is welded to the electrode lead-out part to form a second welding mark, wherein along the first direction, the current collector component is arranged between the main body part and the electrode lead-out part, and projections of the first welding mark and the second welding mark in a plane perpendicular to the first direction do not overlap.

In the above technical solution, by setting the projections of the first welding mark and the second welding mark in the first direction to not overlap, the first welding mark and the second welding mark are arranged in a staggered structure, so that the position where the first connecting part and the second connecting part are welded to each other does not interfere with the position where the first connecting part and the electrode lead-out part are welded to each other, thereby reducing the influence of mutual melting of the first welding mark and the second welding mark, and thus improving the connection quality between the first connecting part and the second connecting part, as well as between the first connecting part and the electrode lead-out part.

In some embodiments, the second welding mark surrounds an outer side of the first welding mark.

In the above technical solution, by surrounding the second welding mark on the outside of the first welding mark, the welding area between the first connecting part of the current collector component and the electrode lead-out part can be increased, which is conducive to improving the welding quality between the first connecting part and the electrode lead-out part.

In some embodiments, the first connecting part is welded to the second connecting part to form a first welding mark, and the second connecting part is welded to the tab to form a third welding mark, wherein along the first direction, the current collector component is arranged between the main body part and the electrode lead-out part, and projections of the first welding mark and the third welding mark in a plane perpendicular to the first direction do not overlap.

In the above technical solution, by setting the projections of the first welding mark and the third welding mark in the first direction to not overlap, the first welding mark and the third welding mark are arranged in a staggered structure, so that the position where the first connecting part and the second connecting part are welded to each other does not interfere with the position where the second connecting part and the tab are welded to each other, thereby reducing the influence of mutual melting of the first welding mark and the third welding mark, and thus improving the connection quality between the first connecting part and the second connecting part, as well as between the second connecting part and the tab.

In some embodiments, the main body part is cylindrical.

In the above technical solution, by setting the main body part of the electrode assembly as a cylindrical structure for subsequent processing to form a cylindrical battery cell, the battery cell has the advantages of high capacity, long cycle life, and wide operating environment temperature.

In some embodiments, the shell assembly comprises a shell, and the electrode assembly is housed within the shell, wherein the shell has a wall portion, and the wall portion is the electrode lead-out part.

In the above technical solution, the shell assembly is provided with a shell, and by using the wall portion of the shell as an electrode lead-out part, the tab can be connected to the wall portion of the shell through a current collector component to achieve the input or output of electrical energy of the battery cell. The structure is simple and easy to assemble.

In some embodiments, a convex part is formed on a side of the wall portion facing the electrode assembly, and a concave part is formed on a side of the wall portion facing away from the electrode assembly and corresponding to a position of the convex part, wherein the convex part is connected to the first connecting part.

In the above technical solution, a convex part is formed on one side of the wall portion facing the electrode assembly, and a corresponding concave part is formed on the other side, so that the wall portion is a concave-convex structure formed by stamping. Therefore, the electrical connection between the electrode assembly and the wall portion can be achieved by welding the convex part of the wall portion to the first connecting part of the current collector component. The wall portion with this structure can effectively improve the structural strength of the wall portion, reduce the deformation phenomenon when the wall portion and the first connecting part are welded to each other, and thus improve the production quality of battery cells.

In some embodiments, the shell assembly further comprises a shell, and the electrode assembly is accommodated within the shell, wherein the shell has a wall portion, and the electrode lead-out part is insulated and installed on the wall portion.

In the above technical solution, the shell assembly is also provided with a shell, and the electrode lead-out part is insulated and installed on the wall portion of the shell, so that the input or output of electrical energy of the battery cell can be achieved through the electrode lead-out part. The battery cell with this structure can reduce the risk of short circuit between the electrode lead-out part and the shell.

In some embodiments, the shell comprises a casing and an end cover, wherein an interior of the casing forms an accommodating cavity with an opening, and the electrode assembly is accommodated within the accommodating cavity; and the end cover closes the opening, wherein the end cover is the wall portion.

In the above technical solution, the wall portion of the shell is the end cover used to close the opening of the casing of the shell. The battery cell using this structure is convenient for assembling the current collector component, which helps to reduce the difficulty of connecting the current collector component with the electrode lead-out part and the current collector component with the tab, thereby improving the production efficiency of the battery cell.

In some embodiments, the shell comprises a casing and an end cover, wherein the casing comprises an integrally formed side wall and the wall portion, wherein the side wall surrounds the wall portion, one end of the side wall is connected to the wall portion, and the other end of the side wall forms an opening opposite to the wall portion, wherein the side wall and the wall portion together define the accommodating cavity for accommodating the electrode assembly; and the end cover closes the opening.

In the above technical solution, by setting the wall portion as one wall of the casing opposite to the end cover, the battery cell using this structure can keep the current collector component and other components away from the end cover, and there is no direct connection between the wall portion and the end cover, thereby avoiding the phenomenon of force generated by the current collector component and other components pulling or twisting the electrode lead-out part acting on the end cover, reducing the risk of connection failure between the end cover and the casing, and further reducing the risk of electrolyte leakage of the battery cell during use.

In the second aspect, the embodiment of the present disclosure also provides a battery, including aforementioned battery cell.

In the third aspect, the embodiment of the present disclosure also provides an electrical equipment, including the aforementioned battery.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is a structural explosion view of the battery provided in some embodiments of the present disclosure;
FIG. 3 is a schematic view of a structure of the battery cell provided in some embodiments of the present disclosure;
FIG. 4 is a structural explosion view of battery cell provided in some embodiments of the present disclosure;
FIG. 5 is a locally sectional view of the battery cell provided in some embodiments of the present disclosure;
FIG. 6 is a partial enlarged view of the A position of the battery cell shown in FIG. 5;
FIG. 7 is a structural schematic view of the current collector component provided in some embodiments of the present disclosure;
FIG. 8 is a sectional view of the current collector component provided in some embodiments of the present disclosure;
FIG. 9 is a sectional view of the current collector component provided in some other embodiments of the present disclosure;
FIG. 10 is a sectional view of the current collector component provided in some other embodiments of the present disclosure;
FIG. 11 is a sectional view of the current collector component provided in some other embodiments of the present disclosure;
FIG. 12 is a locally sectional view of the battery cell in other embodiments provided in some embodiments of the present disclosure;
FIG. 13 is a locally sectional view of the battery cell in some other embodiments provided in some embodiments of the present disclosure;
FIG. 14 is a schematic view of a structure of the battery cell provided in some other embodiments of the present disclosure;
FIG. 15 is a structural explosion view of battery cell provided in some other embodiments of the present disclosure; and
FIG. 16 is a locally sectional view of the battery cell provided in some other embodiments of the present disclosure.

Reference signs: 1000-vehicle; 100-battery; 10-box; 11-first box body; 12-second box body; 20-battery cell; 21-shell assembly; 211-electrode lead-out part; 212-shell; 2121-wall portion; 2121a-convex part; 2121b-concave part; 2122-casing; 2122a-opening; 2123-end cover; 22-electrode assembly; 221-main body part; 222-tab; 23-current collector component; 231-first connecting part; 2311-first through hole; 232-second connecting part; 2321-connecting area; 2322-second through hole; 233-first welding mark; 24-second welding mark; 25-third welding mark; 200-controller; 300-motor; X-first direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the embodiments of the present disclosure, the battery cell can be a secondary battery, which refers to a battery cell with the active material that can be activated and continue to be used by charging after the discharge of the battery cell.

The battery cells can be lithium ion batteries, sodium ion batteries, sodium lithium ion batteries, lithium metal batteries, sodium metal batteries, lithium sulfur batteries, magnesium ion batteries, nickel hydrogen batteries, nickel cadmium batteries, lead accumulator, etc., and this is not limited by the embodiments of the present disclosure.

The battery cell generally includes an electrode assembly. The electrode assembly includes a positive electrode, a negative electrode, and a separator. During the charging and discharging process of battery cell, active ions (such as lithium ions) are inserted and removed back and forth between the positive and negative electrodes. The separator is set between the positive and negative electrodes, which can prevent short circuits between the positive and negative electrodes and allow active ions to pass through.

In some embodiments, the positive electrode can be a positive electrode plate, which may include a positive electrode current collector and a positive electrode active material set on at least one surface of the positive electrode current collector.

As an example, the positive electrode current collector has two surfaces opposite in its own thickness direction, and the positive electrode active material is set on either or both surfaces opposite to each other of the positive electrode current collector.

As an example, the positive electrode current collector can be metal foil or composite current collectors. For example, as a metal foil, silver surface treated aluminum or stainless steel, stainless steel, copper, aluminum, nickel, carbon precision electrodes, carbon, nickel, or titanium can be used. The composite current collector can include a polymer material base layer and a metal layer. Composite current collector can be formed by forming metal materials (aluminum, aluminum alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the positive electrode active material may include at least one of the following materials: lithium-containing phosphate, lithium transition metal oxide, and their respective modified compounds. But the present disclosure is not limited to these materials, and other traditional materials that can be used as positive electrode active materials for batteries can also be used. These positive electrode active materials can be used alone or in combination with two or more. Examples of lithium-containing phosphates may include but are not limited to at least one of lithium iron phosphate (such as LiFePO4 (also referred to as LFP), composite materials of lithium iron phosphate and carbon, lithium manganese phosphate (such as LiMnPO4), composite materials of lithium manganese phosphate and carbon, lithium manganese iron phosphate, and composite materials of lithium manganese iron phosphate and carbon.

In some embodiments, the negative electrode may be a negative electrode plate, which may include a negative electrode current collector.

As an example, the negative electrode current collector can be metal foil, foam metal or composite current collectors. For example, as a metal foil, silver surface treated aluminum or stainless steel, stainless steel, copper, aluminum, nickel, carbon precision electrodes, carbon, nickel, or titanium can be used. Foam metal can be foam nickel, foam copper, foam aluminum, foam alloy, or foam carbon. The composite current collector can include a polymer material base layer and a metal layer. Composite current collector can be formed by forming metal materials (copper, copper alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the negative electrode plate may include a negative electrode current collector and a negative electrode active material set on at least one surface of the negative electrode current collector.

As an example, the negative electrode current collector has two surfaces opposite in its own thickness direction, and the negative electrode active material is set on either or both surfaces opposite to each other of the negative electrode current collector.

As an example, the negative electrode active material can use a negative electrode active material commonly known in the art for battery cells. As an example, negative electrode active materials may include at least one of the following materials: artificial graphite, natural graphite, soft carbon, hard carbon, silicon-based materials, tin-based materials, and lithium titanate.

In some embodiments, the positive electrode current collector may be made of aluminum, and the negative electrode current collector may be made of copper.

In some embodiments, electrode assembly also includes an separator, which is set between the positive and negative electrodes.

In some embodiments, the separator is an isolation membrane. There are no special restrictions on the types of isolation membranes in the present disclosure, and any well-known porous-structure isolation membrane with good chemical and mechanical stability can be selected.

As an example, the main materials of the isolation membrane can be selected from at least one of glass fiber, non-woven fabric, polyethylene, polypropylene, polyvinylidene fluoride and ceramics.

In some embodiments, the separator is a solid electrolyte. The solid electrolyte is located between the positive and negative electrodes, serving both to transport ions and isolate the positive and negative electrodes.

In some embodiments, the battery cell also includes an electrolyte, which plays a role in conducting ions between the positive and negative electrodes. The present disclosure does not have specific restrictions on the types of electrolytes and can be selected according to needs. The electrolyte can be liquid, gelled or solid.

In some embodiments, electrode assembly is of a wound structure. The positive and negative electrode plates are wound into a winding structure.

In some embodiments, electrode assembly is of a stacked structure.

In some embodiments, the shape of electrode assembly may be cylindrical, flat, or in a shape of polygon prism.

In some embodiments, electrode assembly is equipped with an tab, which can lead current out from electrode assembly. The tab includes the positive tab and the negative tab.

In some embodiments, the battery cell may include a shell. The shell is used to pack the electrode assembly, electrolyte and other components. Shell can be a steel shell, aluminum shell, plastic shell (such as polypropylene), composite metal shell (such as copper aluminum composite shell), or aluminum-plastic film.

As an example, the battery cell can be a cylindrical battery cell, a prismatic battery cell, a soft pack battery cell, or other shaped battery cell. The prismatic battery cell includes a square shell battery cell, a blade-shaped battery cell, a polygon prism battery, for example, a hexagonal prismatic battery, etc. There are no special limitations in the present disclosure.

The battery mentioned in the embodiments of the present disclosure refers to a single physical module that includes one or more battery cells to provide higher voltage and capacity.

In some embodiments, the battery can be a battery module, and when there are multiple battery cells, multiple battery cells are arranged and fixed to form one battery module.

In some embodiments, the battery can be a battery pack, which includes a box and a battery cell, and the battery cell or battery module is accommodated in the box.

In some embodiments, the box can serve as a part of the chassis structure of the vehicle. For example, the part of the box can become at least a part of the floor of the vehicle, or the part of the box can become at least a part of the crossbeam and longitudinal beam of the vehicle.

In some embodiments, the battery may serve as an energy storage device. Energy storage devices include energy storage containers, energy storage electrical cabinets, etc.

Batteries have outstanding advantages such as high energy density, low environmental pollution, high power density, long service life, wide adaptability, and low self discharge coefficient, which are an important component of the development of new energy now. However, with the continuous development of battery technology, higher requirements have been put forward for the use reliability of batteries.

For general battery cells, the shell of the battery cell usually includes a casing and an end cover. The end cover covers the opening of the casing. In order to facilitate the assembly of the battery cell, especially in cylindrical battery cells, the end cover is usually used as the power output electrode of the battery cell. The electrical connection between the electrode assembly and the end cover can be achieved by welding the current collector component set inside the shell with the tab of the electrode assembly and the end cover of the shell, so as to realize the input or output of electrical energy of the battery cell. However, in this type of battery cell, the tabs of the electrode assembly are usually made of copper or aluminum, and the current collector component and tabs are made of the same material to reduce the difficulty of welding between the tab and the current collector component. In order to improve the structural strength of the shell, the shell is usually made of steel material, so that the material of the tabs of the electrode assembly is different from that of the end cover of the shell. This will lead to different materials between the current collector component and the end cover, resulting in different melting points and thermal expansion coefficients when the current collector component and the end cover are welded to each other, thereby causing welding cracks between the current collector component and the end cover, which can easily lead to the risk of electrolyte leakage during the use of the battery cell and the significant safety hazards in the use of battery cells, which is not conducive to the reliability of battery cells.

Based on the above considerations, in order to solve the problem of low reliability of battery cells during use, the embodiments of the present disclosure provide a battery cell, which includes a shell assembly, an electrode assembly, and a current collector component. The shell assembly includes electrode lead-out parts for inputting or outputting electrical energy. The electrode assembly is housed inside the shell assembly, and includes a main body part and a tab. The tab is connected to the main body part, and the material of the tab is different from that of the electrode lead-out part. The current collector component is arranged inside the shell assembly, and comprises a first connecting part made of the same material as the electrode lead-out part and a second connecting part made of the same material as the tab, wherein the first connecting part is connected to the second connecting part, the first connecting part is welded to the electrode lead-out part, and the second connecting part is welded to the tab.

In this structure of battery cell, the current collector component is set as a first connecting part and a second connecting part that are mutually connected. The first connecting part is welded to the electrode lead-out part, and the second connecting part is welded to the tab to achieve electrical connection between the electrode assembly and the electrode lead-out part, thereby enabling input or output of electrical energy to the battery cell. By setting the material of the first connecting part to be the same as that of the electrode lead-out part of the shell assembly and the material of the second connecting part to be the same as that of the tab, this structure of the battery cell is convenient for welding connection between the current collector component and the electrode lead-out part, as well as between the current collector component and the tab, which is conducive to reducing the assembly difficulty between the current collector component and the electrode lead-out part of the shell assembly and between the current collector component and the tab of the electrode assembly, so as to improve the assembly efficiency of battery cells. On the other hand, it can achieve mutual welding of the same material between the current collector component and the electrode lead-out part of the shell assembly, so as to reduce the phenomenon of different melting points and thermal expansion coefficients caused by welding the current collector component and the electrode lead-out part that are made of different materials. This can reduce the occurrence of welding cracks between the current collector component and the electrode lead-out part, which is conducive to reducing the risk of electrolyte leakage of battery cells and effectively improving the reliability of battery cells.

The battery cell disclosed in the embodiments of the present disclosure can be used in, but is not limited to, electrical equipment such as vehicles, ships, or aircraft. The power supply system of the electrical equipment can be composed of battery cells, batteries, etc. disclosed in the present disclosure, which is beneficial for solving the problem of electrolyte leakage during the use of battery cells and improving their reliability.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical equipment in one embodiment of the present disclosure being the vehicle 1000 as an example to explain.

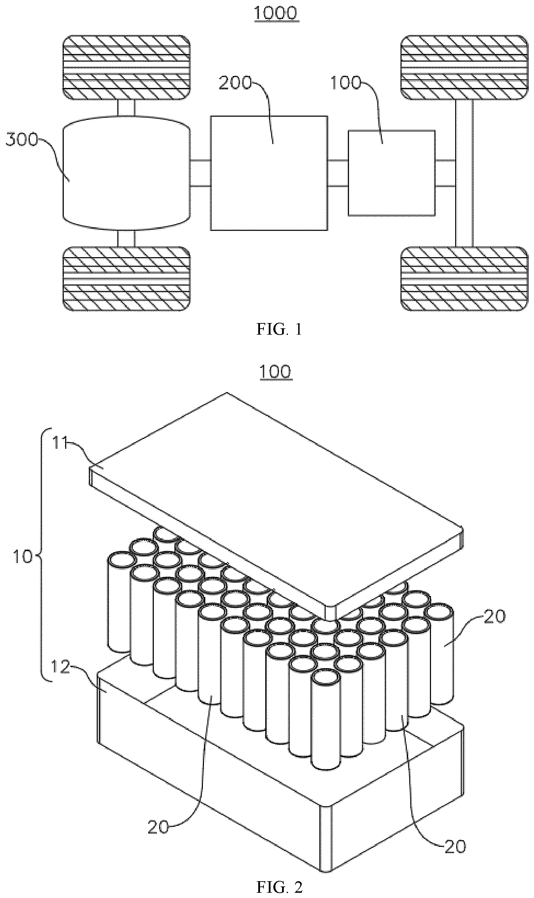

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply or use power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source or use power supply for vehicle 1000, but also as the driving power source for vehicle 1000, thereby replacing or partially replacing fuel or natural gas to provide driving power for vehicle 1000.

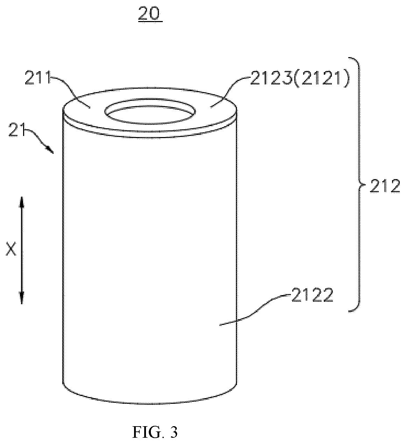

Referring to FIGS. 2 and 3, FIG. 2 is a structural explosion view of the battery 100 provided in some embodiments of the present disclosure; and FIG. 3 is a schematic view of a structure of the battery cell 20 provided in some embodiments of the present disclosure. The battery 100 includes a box 10 and a battery cell 20, which is accommodated within the box 10.

In the above, the box 10 is used to provide assembly space for the battery cell 20, and the box 10 can be of various structures. In some embodiments, the box 10 may include a first box body 11 and a second box body 12, with the first box body 11 and the second box body 12 covering each other. The first box body 11 and the second box body 12 jointly define an assembly space for accommodating the battery cell 20. The second box body 12 can be in a hollow structure with an opening at one end, the first box body 11 can be in a plate-shaped structure, and the first box body 11 is covered on the opening side of the second box body 12 to jointly define the assembly space by the first box body 11 and the second box body 12. The first box body 11 and the second box body 12 can also both be in hollow structure with an opening on one side, and the opening side of the first box body 11 is covered on the opening side of the second box body 12. Of course, the box 10 formed by the first box body 11 and the second box body 12 can be of various shapes, such as cylinder, cuboid, etc. As an example, in FIG. 2, the box 10 is in a shape of cuboid.

In battery 100, one or multiple battery cells 20 can be provided in the box 10. If multiple battery cells 20 are provided in the box 10, the multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for connecting the multiple battery cells 20 for achieving electrical connection between multiple battery cells 20.

In the above, each battery cell 20 can be a secondary battery or a primary battery; and can also be a lithium sulfur battery, sodium ion battery, or magnesium ion battery, but is not limited thereto. The battery cell 20 can be cylindrical, flat, or rectangular, or be of other shapes. As an example, in FIG. 3, the battery cell 20 is in a cylinder structure.

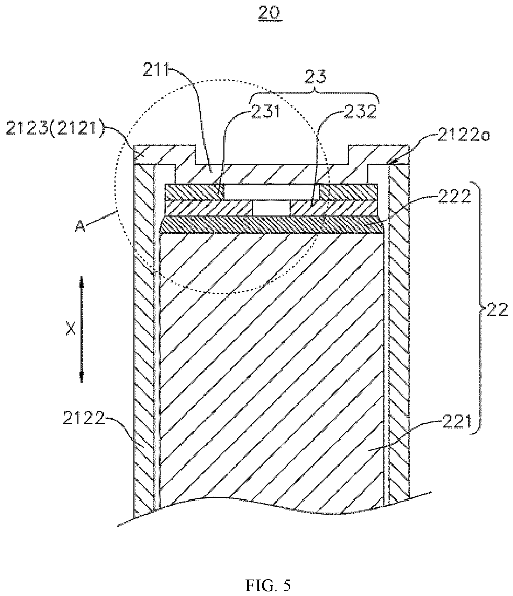

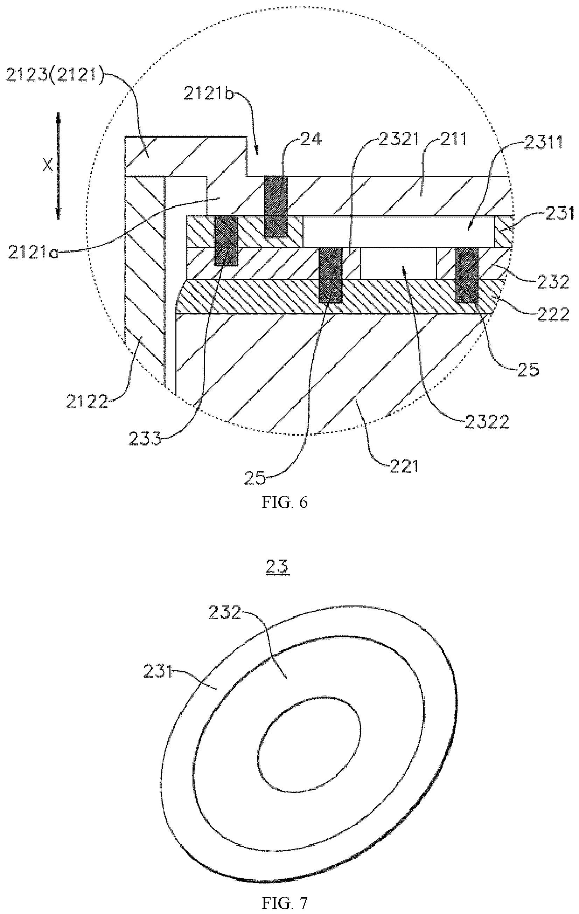

According to some embodiments of the present disclosure, referring to FIG. 3, and further referring to FIGS. 4, 5 and 6, FIG. 4 is a structural explosion view of battery cell 20 provided in some embodiments of the present disclosure; FIG. 5 is a locally sectional view of the battery cell 20 provided in some embodiments of the present disclosure; and FIG. 6 is a partially enlarged view of the A position of the battery cell 20 shown in FIG. 5. The present disclosure provides a battery cell 20, which includes a shell assembly 21, an electrode assembly 22, and a current collector component 23. The shell assembly 21 includes electrode lead-out parts 211 for inputting or outputting electrical energy. The electrode assembly 22 is housed inside the shell assembly 21, and includes a main body part 221 and a tab 222. The tab 222 is connected to the main body part 221, and the material of the tab 222 is different from that of the electrode lead-out part 211. The current collector component 23 is arranged inside the shell assembly 21, and comprises a first connecting part 231 made of the same material as the electrode lead-out part 211 and a second connecting part 232 made of the same material as the tab 222, wherein the first connecting part 231 is connected to the second connecting part 232, the first connecting part 231 is welded to the electrode lead-out part 211, and the second connecting part 232 is welded to the tab 222.

The shell assembly 21 includes a shell 212, and the electrode assembly 22 and the current collector component 23 are all accommodated inside the shell 212. The shell 212 can also be used to accommodate electrolytes, such as electrolyte solutions. The shell 212 can have various structural forms, such as a cylinder or a cuboid. Similarly, the material of shell 212 can also be various, such as copper, iron, aluminum, steel, and aluminum alloy.

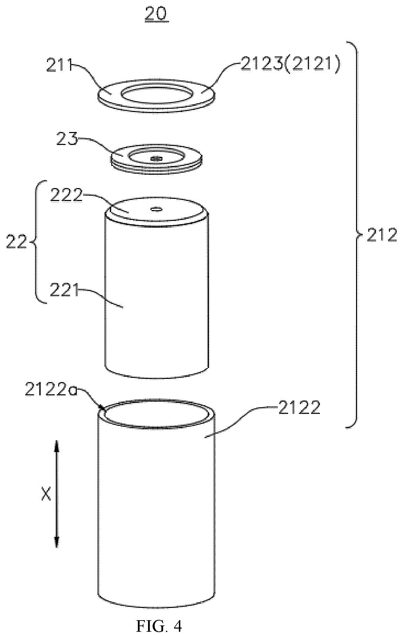

The shell assembly 21 includes an electrode lead-out part 211 for inputting or outputting electrical energy. The electrode lead-out part 211 serves to electrically connect with the tab 222 of the electrode assembly 22, thereby outputting or inputting electrical energy of the battery cell 20. The electrode lead-out part 211 can be the positive electrode for output of the battery cell 20, that is, the electrode lead-out part 211 can be the positive output electrode of the battery cell 20, or the negative electrode for output of the battery cell 20, that is, the electrode lead-out part 211 is the negative output electrode of the battery cell 20. Similarly, the structure of the electrode lead-out part 211 can be various. The electrode lead-out part 211 can be one wall portion 2121 of the shell 212, or an electrode terminal installed on the wall portion 2121 of the shell 212. For example, in FIGS. 4 and 5, the electrode lead-out part 211 is one wall portion 2121 of the shell 212.

In some embodiments, the shell 212 may include a casing 2122 and an end cover 2123. The interior of the casing 2122 is provided with an accommodating cavity, wherein the accommodating cavity is configured to accommodate the electrode assembly 22 and the accommodating cavity has an opening 2122a, that is, the casing 2122 is in a hollow structure with opening 2122a at one end. The end cover 2123 covers the opening 2122a of the casing 2122 and forms a sealed connection to form a sealed space for accommodating the electrode assembly 22 and electrolyte.

When assembling the battery cell 20, the electrode assembly 22 can be first placed into the casing 2122 and filled with electrolyte in the casing 2122. Then, the end cover 2123 covers the opening 2122a of the casing 2122 to complete the assembly of the battery cell 20.

It should be noted that the wall portion 2121 used for installing the electrode lead-out part 211 or the wall portion 2121 being the electrode lead-out part 211 can be an end cover 2123 or one wall of the casing 2122. For example, in FIGS. 4 and 5, The wall portion 2121 is the end cover 2123. Of course, the structure of the battery cell 20 is not limited to this. **In** other embodiments, the wall portion 2121 can also be the bottom wall of the casing 2122 arranged opposite to the end cover 2123. The wall portion 2121 can also be the side wall of the casing 2122 adjacent to and in contact with the end cover 2123.

It should be noted that when the electrode lead-out part 211 is an electrode terminal installed on the wall portion 2121 of the shell 212, the electrode lead-out part 211 is insulated and installed on the shell 212. The output pole of the battery cell 20 with polarity opposite to the electrode lead-out part 211 can be the casing 2122 of the shell 212 or the end cover 2123 of the shell 212. When the electrode lead-out part 211 is the casing 2122 of the shell 212, the output pole of the battery cell 20 with polarity opposite to the electrode lead-out part 211 can be an electrode terminal insulated and installed on the wall portion 2121 of the shell 212, or an end cover 2123 insulated and connected to the casing 2122. When the electrode lead-out part 211 is the end cover 2123 of the shell 212, the output pole of the battery cell 20 with polarity opposite to the electrode lead-out part 211 can be an electrode terminal insulated and installed on the wall portion 2121 of the shell 212, or a casing 2122 insulated and connected to the end cover 2123.

The casing 2122 can be of various shapes, such as cylinder, cuboid, or prismatic structures. The shape of casing 2122 can be determined based on the specific shape of electrode assembly 22. For example, if electrode assembly 22 is of a cylindrical structure, the casing 2122 can be selected as a cylindrical structure; and if the electrode assembly 22 is a cuboid structure, the cuboid structure can be selected for the casing 2122. Of course, the end cover 2123 can also be of various structures, such as a plate-shaped structure or a hollow structure with an opening at one end. As an example, in FIG. 3, the casing 2122 is in a cylinder structure.

Of course, it can be understood that the shell 212 is not limited to the above structure. The shell 212 can also be other structures. For example, the shell 212 can include a casing 2122 and two end covers 2123. The casing 2122 is a hollow structure with openings 2122a on two opposite sides. One end cover 2123 correspondingly covers one opening 2122a of the casing 2122 and forms a sealed connection to form a sealed space for accommodating the electrode assembly 22 and electrolyte. That is to say, the casing 2122 has openings 2122a on two opposite sides, and the two end covers 2123 respectively cover the two sides of the casing 2122 to close the corresponding openings 2122a.

The electrode assembly 22 is a component in the battery cell 20 that undergoes electrochemical reactions. The main body part 221 of the electrode assembly 22 can include a positive electrode plate, a negative electrode plate, and a separator. The electrode assembly 22 can be constructed in a variety of ways. For example, the main body part 221 of the electrode assembly 22 can be in a wound structure formed by winding the positive electrode plate, the separator, and the negative electrode plate, or a stacked structure formed by stacking the positive electrode plate, the separator, and the negative electrode plate. The tab 222 of electrode assembly 22 is a component formed by stacking and connecting the areas of the positive electrode plate that are not coated with the positive electrode active material layer, or the areas of the negative electrode plate that are not coated with the negative electrode active material layer.

As an example, in FIG. 4, the main body part 221 of the electrode assembly 22 is a wound structure formed by winding the positive electrode plate, separator, and negative electrode plate, and the main body part 221 of the electrode assembly 22 is cylindrical.

Each electrode assembly 22 has two tabs 222, which are respectively used to output or input the positive and negative electrodes of the electrode assembly 22. If the tab 222 is used to output the positive electrode of the electrode assembly 22, then the tab 222 is a component formed by stacking and connecting the areas of the positive electrode plate that are not coated with the positive electrode active material layer. If the tab 222 is used to output the negative electrode of the electrode assembly 22, then the tab 222 is a component formed by stacking and connecting the areas of the negative electrode plate that are not coated with the negative electrode active material layer.

The material of the tab 222 is different from that of the electrode lead-out part 211, that is, the tab 222 and the electrode lead-out part 211 are made of different materials. The material of the tab 222 can also be various, such as copper or aluminum. If the tab 222 is the positive tab 222, the material of the tab 222 is usually aluminum. If the tab 222 is the negative tab 222, then the material of the tab 222 is usually copper. It should be noted that the difference in material between the tab 222 and the electrode lead-out part 211 refers to the fact that the main components of the tab 222 and the electrode lead-out part 211 are not the same. For example, if both the tab 222 and the electrode lead-out part 211 are made of a single material, such as copper or aluminum, then the materials of the tab 222 and the electrode lead-out part 211 are composed of different metal elements. If the tab 222 and the electrode lead-out part 211 are made of alloy or mixed materials, such as aluminum alloy or steel, then the difference in material between the tab 222 and the electrode lead-out part 211 means the difference in the main components of the tab 222 and the electrode lead-out part 211, rather than just the difference in the content of the components.

The current collector component 23 includes a first connecting part 231 made of the same material as the electrode lead-out part 211 and a second connecting part 232 made of the same material as the tab 222. The first connecting part 231 is connected to the second connecting part 232, that is, the current collector component 23 is formed by connecting a first connecting part 231 and a second connecting part 232 made of different materials, so as to form an electrical connection between the first connecting part 231 and the second connecting part 232.

The material of electrode lead-out part 211 can be various, such as copper, iron, aluminum, steel, and aluminum alloy. For example, in FIGS. 5 and 6, the electrode lead-out part 211 is one wall portion 2121 of the shell 212, and the material of the shell 212 can be steel. Correspondingly, the material of the first connecting part 231 of the current collector component 23 is the same as that of the shell 212, that is, the material of the first connecting part 231 of the current collector component 23 is also steel. Similarly, if the tab 222 is the positive tab 222, then the material of the tab 222 is usually aluminum, and the corresponding material of the second connecting part 232 of the current collector component 23 is aluminum. If the tab 222 is the negative tab 222, then the material of the tab 222 is usually copper, and the corresponding material of the second connecting part 232 of the current collector component 23 is copper.

It should be noted that the material of the electrode lead-out part 211 is the same as that of the first connecting part 231, which means that the main components of the electrode lead-out part 211 are the same as those of the first connecting part 231. For example, if both the electrode lead-out part 211 and the first connecting part 231 are made of a single material, such as copper or aluminum, then both the electrode lead-out part 211 and the first connecting part 231 are composed of the same metal element. If the electrode lead-out part 211 and the first connecting part 231 are made of alloy or mixed materials, such as aluminum alloy or steel, then the same material between the electrode lead-out part 211 and the first connecting part 231 is that the main components of the electrode lead-out part 211 and the first connecting part 231 are the same. If only the contents of the component of the electrode lead-out part 211 and the first connecting part 231 are different, then they are also made of the same material, for example, low carbon steel, medium carbon steel, and high carbon steel are all of the same material. Similarly, the material of the tab 222 is the same as that of the second connecting part 232, which means that the main components of the tab 222 are the same as those of the second connecting part 232. For example, if both the tab 222 and the second connecting part 232 are made of a single material, such as copper or aluminum, then both the tab 222 and the second connecting part 232 are composed of the same metal element. If the tab 222 and the second connecting part 232 are made of alloy or mixed materials, such as aluminum alloy or steel, then the same material between the tab 222 and the second connecting part 232 is that their main components are the same. If only the contents of the component of the tab 22 and the second connecting part 232 are different, then they are also made of the same material, for example, low carbon steel, medium carbon steel, and high carbon steel are all of the same material.

Optionally, the connection method between the first connecting part 231 and the second connecting part 232 of the current collector component 23 can be various, such as snap fit, bolt connection, laser welding connection, coating connection, friction welding connection, or ultrasonic connection. As for current collector component 23 of this structure, even though the first connecting part 231 and the second connecting part 232 are of different materials and will form the welded cracks after welded to each other, the welded cracks between the first connecting part 231 and the second connecting part 232 are located in shell 212 of the shell assembly 21, which will not affect the shell 212, thereby reducing the risk of electrolyte leakage.

In some embodiments, the battery cell 20 may further include a pressure relief mechanism installed on the shell 212. Optionally, the pressure relief mechanism may be provided on the end cover 2123 or on the casing 2122. The pressure relief mechanism is used to release the pressure inside the battery cell 20 when the internal pressure or temperature of the battery cell 20 reaches a predetermined value.

For example, a pressure relief mechanism can be a pressure relief component such as an explosion-proof valve, explosion-proof sheet, air valve, pressure relief valve, or safety valve.

The current collector component 23 is set as a first connecting part 231 and a second connecting part 232 that are mutually connected. The first connecting part 231 is welded to the electrode lead-out part 211, and the second connecting part 232 is welded to the tab 222 to achieve electrical connection between the electrode assembly 22 and the electrode lead-out part 211, thereby enabling input or output of electrical energy to the battery cell 20. By setting the material of the first connecting part 231 to be the same as that of the electrode lead-out part 211 of the shell assembly 21 and the material of the second connecting part 232 to be the same as that of the tab 222, this structure of the battery cell 20 is convenient for welding connection between the current collector component 23 and the electrode lead-out part 211, as well as between the current collector component 23 and the tab 222, which is conducive to reducing the assembly difficulty between the current collector component 23 and the electrode lead-out part 211 of the shell assembly 21 and between the current collector component 23 and the tab 222 of the electrode assembly 22, so as to improve the assembly efficiency of battery cells 20. On the other hand, it can achieve mutual welding of the same material between the current collector component 23 and the electrode lead-out part 211 of the shell assembly 21, so as to reduce the phenomenon of different melting points and thermal expansion coefficients caused by welding the current collector component 23 and the electrode lead-out part 211 that are made of different materials. This can reduce the occurrence of welding cracks between the current collector component 23 and the electrode lead-out part 211, which is conducive to reducing the risk of electrolyte leakage of battery cells 20 and effectively improving the reliability of battery cells 20.

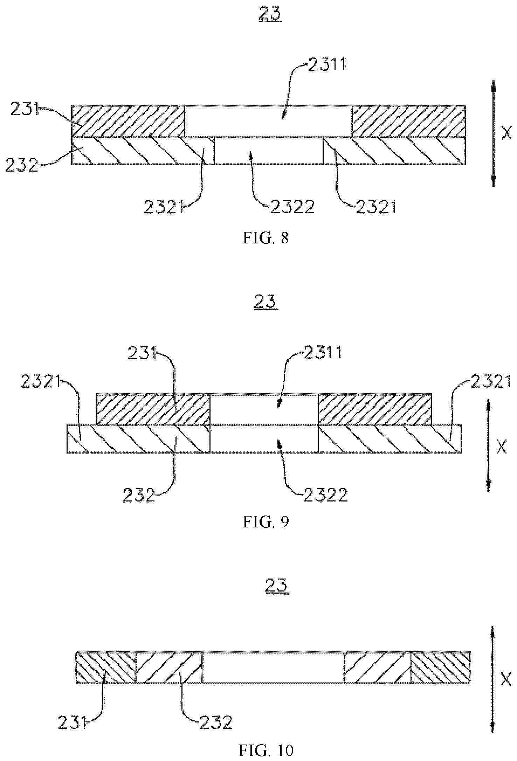

In accordance with some embodiments of the present disclosure, referring to FIGS. 5 and 6 and further referring to FIGS. 7 and 8, FIG. 7 is a structural schematic view of the current collector component 23 provided in some embodiments of the present disclosure; and FIG. 8 is a sectional view of the current collector component 23 provided in some embodiments of the present disclosure. Along the first direction X, the current collector component 23 is positioned between the main body part 221 and the electrode lead-out part 211. Along the first direction X, the first connecting part 231 and the second connecting part 232 are stacked, and the first connecting part 231 is located on the side of the second connecting part 232 facing the electrode lead-out part 211.

Along the first direction X, the current collector component 23 is arranged between the main body part 221 and the electrode lead-out part 211, that is, the main body part 221 and the electrode lead-out part 211 are arranged along the first direction X, and the current collector component 23 is located between the main body part 221 and the electrode lead-out part 211.

The first connecting part 231 is located on the side of the second connecting part 232 facing the electrode lead-out part 211, that is, in the first direction X, the first connecting part 231 is closer to the electrode lead-out part 211 than the second connecting part 232.

By stacking the first connecting part 231 and second connecting part 232 of the current collector component 23 along the first direction X between the main body part 221 and the electrode lead-out part 211, and setting the first connecting part 231 facing the electrode lead-out part 211, it is convenient for the first connecting part 231 of the current collector component 23 to be welded to the electrode lead-out part 211 of the shell assembly 21, which is conducive to reducing the assembly difficulty between the current collector component 23 and the electrode lead-out part 211 and improving the assembly efficiency of the battery cell 20.

In some embodiments, as shown in FIGS. 5 and 6, along the first direction X, the tab 222 is positioned on the side of the main body part 221 facing the second connecting part 232.

The tab 222 is set on the side of the main body part 221 facing the second connecting part 232, that is, the tab 222 is connected to one end of the main body part 221 near the electrode lead-out part 211 in the first direction X. That is to say, the electrode assembly 22 has a tab 222 formed at one end near the electrode lead-out part 211 in the first direction X, so that the tab 222 is located between the main body part 221 and the second connecting part 232 in the first direction X.

By setting the tab 222 to be located on one side of the main body part 221 facing the second connecting part 232 in the first direction X, the tab 222 and the second connecting part 232 are arranged facing each other in the first direction X, which facilitates the mutual welding between the second connecting part 232 of the current collector component 23 and the tab 222 of the electrode assembly 22, and helps to reduce the assembly difficulty between the current collector component 23 and the tab 222.

In accordance with some embodiments of the present disclosure, referring to FIGS. 6, 7 and 8, along the first direction X, the second connecting part 232 has a connecting area 2321 that is not covered by the first connecting part 231, and the connecting area 2321 is welded to the tab 222.

The second connecting part 232 has a connecting area 2321 that is not covered by the first connecting part 231, that is, in the first direction X, the first connecting part 231 only covers a part of the second connecting part 232, and the part of the second connecting part 232 that is not covered by the first connecting part 231 is used for mutual welding with the tab 222.

It should be noted that the structure of the connecting area 2321 formed by the current collector component 23 on the second connecting part 232 that is not covered by the first connecting part 231 can be various. For example, it can be to provide a through hole on the first connecting part to avoid the second connecting part 232, or to set the size of the first connecting part 231 to be smaller than that of the second connecting part 232.

The area of the second connecting part 232 that is not covered by the first connecting part 231 in the first direction X forms a connecting area 2321 for welding with the tab 222, that is, the area of the second connecting part 232 used for welding with the tab 222 is not blocked by the first connecting part 231, so that when welding the second connecting part 232 and the tab 222, the welding heat only needs to pass through the connecting area 2321 of the second connecting part 232 to complete the welding connection between the first connecting part 231 and the tab 222, thereby reducing the welding difficulty between the current collector component 23 and the tab 222 on the one hand, and on the other hand, making it unnecessary to weld the first connecting part 231 and the tab 222 after welding heat passes through the first connecting part 231, thereby shortening the transfer path of welding heat, which is conducive to improving the welding quality and welding efficiency between the first connecting part 231 and the tab 222.

In accordance with some embodiments of the present disclosure, referring to FIGS. 6, 7 and 8, the first connecting part 231 is provided with a first through hole 2311, wherein the first through hole 2311 penetrates through both sides of the first connecting part 231 in the first direction X, and the second connecting part 232 forms the connecting area 2321 corresponding to an area of the first through hole 2311.

For example, the first through hole 2311 extends along the first direction X and penetrates through both sides of the first connecting part 231, so that the first connecting part 231 avoids the second connecting part 232 in the first direction X, thereby forming a connecting area 2321 on the second connecting part 232 that is not covered by the first connecting part 231. Of course, in other embodiments, the extension direction of the first through hole 2311 can also be approximately the first direction X, that is, there is an angle formed between the extension direction of the first through hole 2311 and the first direction X.

The first through hole 2311 penetrating through both sides of the first connecting part 231 is provided on the first connecting part 231, to avoid the second connecting part 232 through the first through hole 2311, thereby achieving a connecting area 2321 of the second connecting part 232 that is not covered by the first connecting part 231. The structure is simple and easy to implement.

In some embodiments, referring to FIGS. 6, 7 and 8 continuously, the connecting area 2321 is provided with a second through hole 2322 communicated with the first through hole 2311, wherein the second through hole 2322 penetrates through both sides of the second connecting part 232 in the first direction X, and an aperture of the second through hole 2322 is smaller than that of the first through hole 2311.

For example, the second through hole 2322 extends along the first direction X and penetrates through both sides of the second connecting part 232. Of course, in other embodiments, the extension direction of the second through hole 2322 can also be approximately the first direction X, that is, there is an angle formed between the extension direction of the second through hole 2322 and the first direction X.

Optionally, the first through hole 2311 and the second through hole 2322 can be arranged coaxially or with different axes. For example, in FIG. 8, the first through hole 2311 and the second through hole 2322 are arranged coaxially.

It should be noted that the second connecting part 232 forms a connecting area 2321 corresponding to the position of the first through hole 2311, and the area of the connecting area 2321 without the second through hole 2322 is used for welding connection with the tab 222 to achieve electrical connection between the second connecting part 232 and the tab 222.

By setting a second through hole 2322 that is communicated with the first through hole 2311 in the connecting area 2321 of the second connecting part 232, the first through hole 2311 and the second through hole 2322 can cooperate to form a channel for the electrolyte to pass through, so that the electrolyte can enter the electrode assembly 22 through the first through hole 2311 and the second through hole 2322, which is conducive to improving the wetting effect of the electrode assembly 22 and thereby enhancing the use performance of the battery cell 20. In addition, by setting the aperture of the second through hole 2322 to be smaller than that of the first through hole 2311, the area where the second through hole 2322 is not provided in the connecting area 2321 can be welded to the tab 222, making it easier for the second connecting part 232 to be welded to the tab 222.

**In** some embodiments, referring to FIG. 8, the outer peripheral surface of the first connecting part 231 is flush with the outer peripheral surface of the second connecting part 232. That is to say, the edge of the first connecting part 231 is flush with the edge of the second connecting part 232.

For example, both the first connecting part 231 and the second connecting part 232 are disk structures, and the first connecting part 231 and the second connecting part 232 are coaxially arranged and have the same radius.

By setting the outer peripheral surface of the first connecting part 231 and the outer peripheral surface of the second connecting part 232 to be flush with each other, the structure of the current collector component 23 is made more regular, which facilitates the installation of the current collector component 23 and the welding connection between the current collector component 23 and the electrode lead-out part 211 and the tab 222, and can reduce the risk of interference between the current collector component 23 and other structures of the battery cell 20.

According to some embodiments of the present disclosure, referring to FIG. 9, FIG. 9 is a sectional view of the current collector component 23 provided in some other embodiments of the present disclosure. The connecting area 2321 surrounds the outer side of the projection of the first connecting part 231 along the first direction X on the second connecting part 232.

The connecting area 2321 surrounds the outer side of the projection of the first connecting part 231 along the first direction X on the second connecting part 232, that is, the edge of the second connecting part 232 is a structure that exceeds the edge of the first connecting part 231, so that the area of the second connecting part 232 located between the outer circumferential surface of the second connecting part 232 and the outer circumferential surface of the first connecting part 231 in the radial direction of the second connecting part 232 is the connecting area 2321 for welding connection with the tab 222.

For example, both the first connecting part 231 and the second connecting part 232 are disc structures, and the first connecting part 231 is coaxially arranged with the second connecting part 232, that is, the radius of the first connecting part 231 is smaller than that of the second connecting part 232, such that the second connecting part 232 forms a connection area 2321 at the area beyond the first connecting part 231 in the radial direction of the second connecting part 232.

The connecting area 2321 is set to surround the outer side of the projection of the first connecting part 231 along the first direction X on the second connecting part 232, so that the current collector component 23 has a structure where the edge of the second connecting part 232 exceeds the edge of the first connecting part 231, so as to achieve avoidance of the first connecting part 231 to the second connecting part 232, thereby achieving a connecting area 2321 of the second connecting part 232 that is not covered by the first connecting part 231. The structure is simple and easy to implement.

In some embodiments, referring to FIG. 9, the first connecting part 231 is provided with a first through hole 2311 that passes through both sides of the first connecting part 231 in the first direction X, and the second connecting part 232 is provided with a second through hole 2322 that passes through both sides of the second connecting part 232 in the first direction X, wherein the first through hole 2311 is communicated with the second through hole 2322.

For example, the first through hole 2311 extends along the first direction X and penetrates through both sides of the first connecting part 231. Of course, in other embodiments, the extension direction of the first through hole 2311 can also be approximately the first direction X, that is, there is an angle formed between the extension direction of the first through hole 2311 and the first direction X.

For example, the second through hole 2322 extends along the first direction X and penetrates through both sides of the second connecting part 232. Of course, in other embodiments, the extension direction of the second through hole 2322 can also be approximately the first direction X, that is, there is an angle formed between the extension direction of the second through hole 2322 and the first direction X.

The first through hole 2311 is communicated with the second through hole 2322, that is, the projections of the first through hole 2311 and the second through hole 2322 in the first direction X have overlapping area.

By setting a first through hole 2311 on the first connecting part 231 and a second through hole 2322 on the second connecting part 232, and communicating the first through hole 2311 with the second through hole 2322, the first through hole 2311 and the second through hole 2322 can cooperate to form a channel for the electrolyte to pass through, so that the electrolyte can enter the electrode assembly 22 through the first through hole 2311 and the second through hole 2322, which is conducive to improving the wetting effect of the electrode assembly 22 and thereby enhancing the use performance of the battery cell 20.

In some embodiments, referring to FIG. 9 continuously, the first through hole 2311 and the second through hole 2322 are coaxially arranged and have the same radius. The central axis of the first through hole 2311 coincides with the central axis of the second through hole 2322, which means that the projections of the first through hole 2311 and the second through hole 2322 in the first direction X completely overlap.

By setting the first through hole 2311 and the second through hole 2322 to a coaxial and equal radius structure, it is possible to simultaneously process the first through hole 2311 and the second through hole 2322 on the first connecting part 231 and the second connecting part 232 after stacking them, without the need to process the first through hole 2311 and the second through hole 2322 separately on the first connecting part 231 and the second connecting part 232 and then stack the first connecting part 231 and the second connecting part 232. This can optimize the processing technology and production cycle of the current collector component 23, reduce the processing difficulty, and improve the production efficiency of the current collector component 23.

In accordance with some embodiments of the present disclosure, referring to FIGS. 7, 8 and 9, both the first connecting part 231 and the second connecting part 232 are disk structures, and the first connecting part 231 and the second connecting part 232 are coaxially arranged.

The first connecting part 231 and the second connecting part 232 are coaxially arranged, that is, the central axis of the first connecting part 231 coincides with the central axis of the second connecting part 232.

By setting the first connecting part 231 and the second connecting part 232 to be coaxial with each other, the structure of the current collector component 23 is made more regular, which facilitates the installation of the current collector component 23 and is conducive to saving the occupied space of the current collector component 23 in the shell assembly 21, thus improving the utilization rate of the internal space of the battery cell 20.

According to some embodiments of the present disclosure, referring to FIG. 10, FIG. 10 is a sectional view of the current collector component 23 provided in some other embodiments of the present disclosure. Along the first direction X, the current collector component 23 is positioned between the main body part 221 and the electrode lead-out part 211. The first connecting part 231 surrounds the outer side of the second connecting part 232, and the inner peripheral surface of the first connecting part 231 is connected to the outer peripheral surface of the second connecting part 232.

The inner peripheral surface of the first connecting part 231 and the outer peripheral surface of the second connecting part 232 abut against each other and welded together.

For example, both the first connecting part 231 and the second connecting part 232 are annular structures.

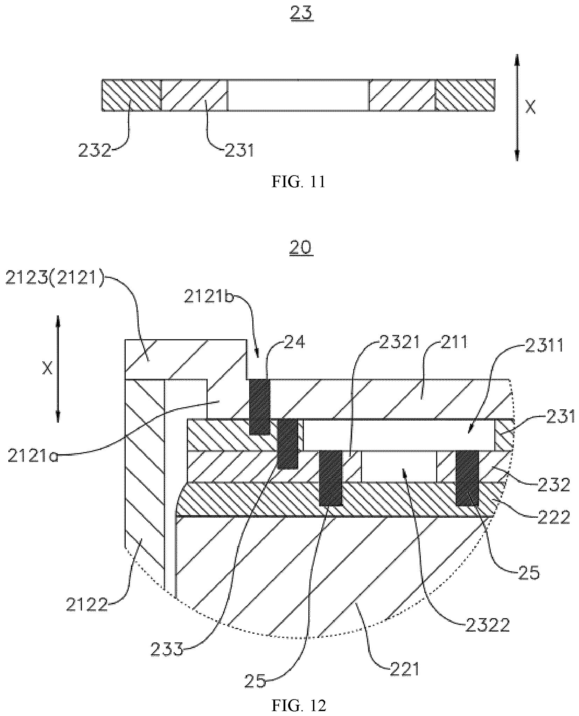

It should be noted that in some embodiments, the current collector component 23 may also be other structures. Referring to FIG. 11, FIG. 11 is a sectional view of the current collector component 23 provided in some other embodiments of the present disclosure. The second connecting part 232 surrounds the outer side of the first connecting part 231, and the inner peripheral surface of the second connecting part 232 is connected to the outer peripheral surface of the first connecting part 231.

By setting the first connecting part 231 and the second connecting part 232 of the current collector component 23 in a mutually surrounding structure, that is, the first connecting part 231 surrounds the outer side of the second connecting part 232, or the second connecting part 232 surrounds the outer side of the first connecting part 231, the current collector component 23 using this structure can save the occupied space of the current collector component 23 in the first direction X, thereby effectively improving the internal space utilization rate of the battery cell 20 and increasing the energy density of the battery cell 20.

According to some embodiments of the present disclosure, as shown in FIGS. 5 and 6, the first connecting part 231 is welded to the second connecting part 232 to form a first welding mark 233, and the first connecting part 231 is welded to the electrode lead-out part 211 to form a second welding mark 24. Along the first direction X, the current collector component 23 is positioned between the main body part 221 and the electrode lead-out part 211, and the projections of the first welding mark 233 and the second welding mark 24 in a plane perpendicular to the first direction X do not overlap.

The projections of the first welding mark 233 and the second welding mark 24 in a plane perpendicular to the first direction X do not overlap, that is, the projection of the first welding mark 233 in the first direction X does not intersect with the projection of the second welding mark 24 in the first direction X. That is to say, the projection of the first welding mark 233 in a plane perpendicular to the first direction X is spaced apart from the projection of the second welding mark 24 in a plane perpendicular to the first direction X.

For example, in FIG. 6, the first welding mark 233 surrounds the outer side of the second welding mark 24.

It should be noted that in the embodiment where the first connecting part 231 surrounds the outer side of the second connecting part 232 or the second connecting part 232 surrounds the outer side of the first connecting part 231, the first welding mark 233 is formed in the area where the first connecting part 231 and the second connecting part 232 are in contact with each other. The projections of the first welding mark 233 and the second welding mark 24 in the plane perpendicular to the first direction X do not overlap, that is, in the radial direction of the first connecting part 231, the first welding mark 233 and the second welding mark 24 are spaced apart.

By setting the projections of the first welding mark 233 and the second welding mark 24 in the first direction X to not overlap, the first welding mark 233 and the second welding mark 24 are arranged in a staggered structure, so that the position where the first connecting part 231 and the second connecting part 232 are welded to each other does not interfere with the position where the first connecting part 231 and the electrode lead-out part 211 are welded to each other, thereby reducing the influence of mutual melting of the first welding mark 233 and the second welding mark 24, and thus improving the connection quality between the first connecting part 231 and the second connecting part 232, as well as between the first connecting part 231 and the electrode lead-out part 211.

Of course, the structure of battery cell 20 is not limited to this. **In** some embodiments, referring to FIG. 12, FIG. 12 is a locally sectional view of the battery cell 20 in other embodiments provided in some embodiments of the present disclosure. The second welding mark 24 can also surround the outer side of the first welding mark 233. It should be noted that the second welding mark 24 surrounds the outer side of the first welding mark 233. The second welding mark 24 can be a continuous annular structure that surrounds the outer side of the first welding mark 233 and is connected end-to-end, or can be a discontinuous annular structure that surrounds the outer side of the first welding mark 233.

By surrounding the second welding mark 24 on the outside of the first welding mark 233, the welding area between the first connecting part 231 of the current collector component 23 and the electrode lead-out part 211 can be increased, which is conducive to improving the welding quality between the first connecting part 231 and the electrode lead-out part 211.

According to some embodiments of the present disclosure, referring to FIGS. 5 and 6 continuously, the first connecting part 231 is welded to the second connecting part 232 to form a first welding mark 233, and the second connecting part 232 is welded to the tab 222 to form a third welding mark 25. Along the first direction X, the current collector component 23 is positioned between the main body part 221 and the electrode lead-out part 211, and the projections of the first welding mark 233 and the third welding mark 25 in a plane perpendicular to the first direction X do not overlap.

The projections of the first welding mark 233 and the third welding mark 25 in a plane perpendicular to the first direction X do not overlap, that is, the projection of the first welding mark 233 in the first direction X does not intersect with the projection of the third welding mark 25 in the first direction X. That is to say, the projection of the first welding mark 233 in a plane perpendicular to the first direction X is spaced apart from the projection of the third welding mark 25 in a plane perpendicular to the first direction X.

For example, in FIG. 6, FIG. 6 shows an embodiment where the second connecting part 232 forms a connection area 2321 in the region corresponding to the first through hole 2311. The second welding mark 24 is located between the first welding mark 233 and the third welding mark 25 in the radial direction of the current collector component 23. Of course, in the embodiment where the second welding mark 24 surrounds the first welding mark 233, the first welding mark 233 is located between the second welding mark 24 and the third welding mark 25 in the radial direction of the current collector component 23. It should be noted that in the embodiment where the connecting area 2321 surrounds the outer side of the projection of the first connecting part 231 along the first direction X on the second connecting part 232, the third welding mark 25 surrounds the outer sides of the first welding mark 233 and the second welding mark 24. In this structure, the first welding mark 233 can be located between the third welding mark 25 and the second welding mark 24 in the radial direction of the current collector component 23, or the second welding mark 24 can be located between the third welding mark 25 and the first welding mark 233 in the radial direction of the current collector component 23. It should be noted that the third welding mark 25 surrounds the outer sides of the first welding mark 233 and the second welding mark 24. The third welding mark 25 can be a continuous annular structure that surrounds the outer sides of the first welding mark 233 and the second welding mark 24 and is connected end-to-end, or a discontinuous annular structure that surrounds the outer sides of the first welding mark 233 and the second welding mark 24.

It should be noted that in the embodiment where the first connecting part 231 surrounds the outer side of the second connecting part 232 or the second connecting part 232 surrounds the outer side of the first connecting part 231, the first welding mark 233 is formed in the area where the first connecting part 231 and the second connecting part 232 are in contact with each other. The projections of the first welding mark 233 and the third welding mark 25 in the plane perpendicular to the first direction X do not overlap, that is, in the radial direction of the first connecting part 231, the first welding mark 233 and the third welding mark 25 are spaced apart.

By setting the projections of the first welding mark 233 and the third welding mark 25 in the first direction X to not overlap, the first welding mark 233 and the third welding mark 25 are arranged in a staggered structure, so that the position where the first connecting part 231 and the second connecting part 232 are welded to each other does not interfere with the position where the second connecting part 232 and the tab 222 are welded to each other, thereby reducing the influence of mutual melting of the first welding mark 233 and the third welding mark 25, and thus improving the connection quality between the first connecting part 231 and the second connecting part 232, as well as between the second connecting part 232 and the tab 222.

According to some embodiments of the present disclosure, as shown in FIGS. 4 and 5, the main body part 221 is cylindrical.

The central axis of the main body part 221 extends along the first direction X.

By setting the main body part 221 of the electrode assembly 22 as a cylindrical structure for subsequent processing to form a cylindrical battery cell 20, the battery cell 20 has the advantages of high capacity, long cycle life, and wide operating environment temperature.

According to some embodiments of the present disclosure, as shown in FIGS. 3, 4, 5, and 6, the shell assembly 21 comprises a shell 212, and the electrode assembly 22 is housed within the shell 212, wherein the shell 212 has a wall portion 2121, and the wall portion 2121 is the electrode lead-out part 211.

The wall portion 2121 is the electrode lead-out part 211, that is, the first connecting part 231 of the current collector component 23 is welded to one wall of the shell 212 to achieve the input or output of electrical energy of the battery cell 20.

The shell assembly 21 is provided with a shell 212, and by using the wall portion 2121 of the shell 212 as an electrode lead-out part 211, the tab 222 can be connected to the wall portion 2121 of the shell 212 through a current collector component 23 to achieve the input or output of electrical energy of the battery cell 20. The structure is simple and easy to assemble.

In some embodiments, referring to FIGS. 5 and 6, a convex part 2121a is formed on a side of the wall portion 2121 facing the electrode assembly 22, and a concave part 2121b is formed on a side of the wall portion 2121 facing away from the electrode assembly 22 and corresponding to a position of the convex part 2121a, wherein the convex part 2121a is connected to the first connecting part 231.

For example, the wall portion 2121 is formed by stamping to respectively form convex part 2121a and concave part 2121b on both sides of the wall portion 2121 along the first direction X. Of course, in other embodiments, the wall portion 2121 can also be formed through processes such as casting.

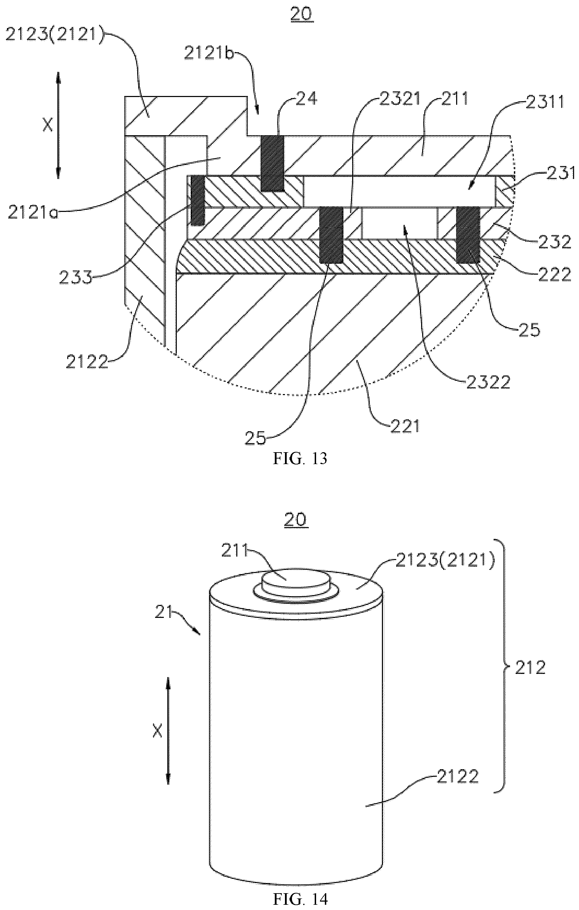

It should be noted that in the embodiment where the first connecting part 231 is welded to the second connecting part 232 to form the first welding mark 233, and the first connecting part 231 is welded to the electrode lead-out part 211 to form the second welding mark 24, the convex part 2121a is connected to the first connecting part 231, that is, the convex part 2121a is the electrode lead-out part 211, and the convex part 2121a is welded to the first connecting part 231 to form the second welding mark 24. In FIG. 6, the projection of the convex part 2121a in the first direction X overlaps with the projection of the first welding mark 233 in the first direction X. Of course, in some embodiments, referring to FIG. 13, FIG. 13 is a partially sectional view of the battery cell 20 provided in some embodiments of the present disclosure in some other embodiments. It is also possible to set the projection of the convex part 2121a in the first direction X to not overlap the projection of the first welding mark 233 in the first direction X, that is, the first welding mark 233 is located on the outer side of the convex part 2121a in the radial direction of the convex part 2121a. In the actual assembly process, the first welding mark 233 will protrude from the surface of the first connecting part 231 facing the convex part 2121a in the first direction X. Therefore, the battery cell 20 using this structure can effectively reduce the interference effect between the first welding mark 233 and the convex part 2121a, so that the convex part 2121a and the first connecting part 231 can be tightly adhered in the first direction X, thereby effectively reducing the impact to the welding connection between the convex part 2121a and the first connecting part 231 by the first welding mark 233, which is beneficial for improving the welding quality between the convex part 2121a and the first connecting part 231.

A convex part 2121a is formed on one side of the wall portion 2121 facing the electrode assembly 22, and a corresponding concave part 2121b is formed on the other side, so that the wall portion 2121 is a concave-convex structure formed by stamping. Therefore, the electrical connection between the electrode assembly 22 and the wall portion 2121 can be achieved by welding the convex part 2121a of the wall portion 2121 to the first connecting part 231 of the current collector component 23. The wall portion 2121 with this structure can effectively improve the structural strength of the wall portion 2121, reduce the deformation phenomenon when the wall portion 2121 and the first connecting part 231 are welded to each other, and thus improve the production quality of battery cells 20.

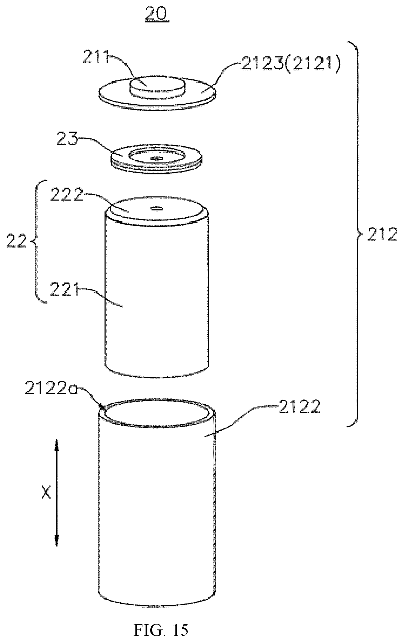

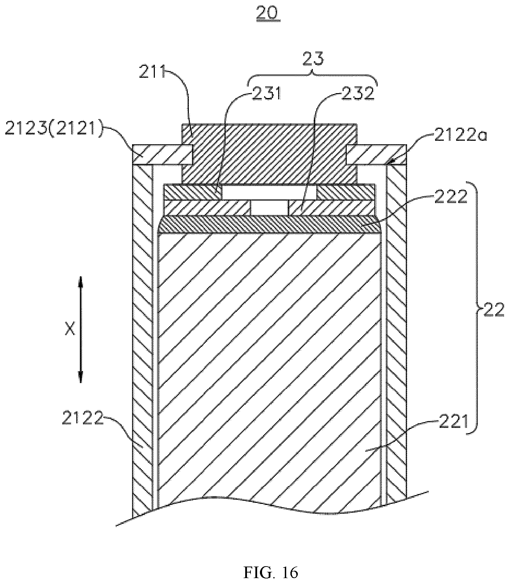

According to some embodiments of the present disclosure, referring to FIGS. 14, 15 and 16, FIG. 14 is a schematic view of a structure of the battery cell 20 provided in some other embodiments of the present disclosure; FIG. 15 is a structural explosion view of battery cell 20 provided in some other embodiments of the present disclosure; and FIG. 16 is a locally sectional view of the battery cell 20 provided in some other embodiments of the present disclosure. The shell assembly 21 also includes a shell 212, and the electrode assembly 22 is accommodated in the shell 212. The shell 212 has a wall portion 2121, and electrode lead-out part 211 is provided on the wall portion 2121 in an insulating manner.

The shell 212 has a wall portion 2121, and the electrode lead-out part 211 is insulated and installed on the wall portion 2121, that is, the electrode lead-out part 211 is a component insulated and installed on one wall of the shell 212, and there is no electrical connection between the electrode lead-out part 211 and the wall portion 2121 of the shell 212, so that the electrode lead-out part 211 is welded to the first connecting part 231 of the current collector component 23 to achieve the input or output of electrical energy of the battery cell 20.

The shell assembly 21 is also provided with a shell 212, and the electrode lead-out part 211 is insulated and installed on the wall portion 2121 of the shell 212, so that the input or output of electrical energy of the battery cell 20 can be achieved through the electrode lead-out part 211. The battery cell 20 with this structure can reduce the risk of short circuit between the electrode lead-out part 211 and the shell 212.

According to some embodiments of the present disclosure, as shown in FIGS. 4 and 5, as well as FIGS. 15 and 16, the shell 212 includes a casing 2122 and an end cover 2123. The interior of the casing 2122 forms an accommodating cavity with an opening 2122a, and the electrode assembly 22 is accommodated in the accommodating cavity. The end cover 2123 closes the opening 2122a, and the end cover 2123 is a wall portion 2121.

The end cover 2123 is a wall portion 2121, that is, the end cover 2123 is welded to the first connecting part 231 of the current collector component 23 or the electrode lead-out part 211 is insulated and installed on the end cover 2123, so that the current collector component 23 is located between the main body part 221 and the end cover 2123 in the first direction X.

The wall portion 2121 of the shell 212 is the end cover 2123 used to close the opening 2122a of the casing 2122 of the shell 212. The battery cell 20 using this structure is convenient for assembling the current collector component 23, which helps to reduce the difficulty of connecting the current collector component 23 with the electrode lead-out part 211 and the current collector component 23 with the tab 222, thereby improving the production efficiency of the battery cell 20.

It should be noted that the structure of the battery cell 20 is not limited to this. In some embodiments, the battery cell 20 can also be other structures. For example, the shell 212 includes a casing 2122 and an end cover 2123. The casing 2122 includes an integrally formed side wall and a wall portion 2121, and the side wall surrounds the wall portion 2121. One end of the side wall is connected to the wall portion 2121, and the other end of the side wall surrounds to form the opening 2122a opposite to the wall portion 2121. The side wall and the wall portion 2121 jointly define the accommodating cavity for accommodating the electrode assembly 22, and the end cover 2123 closes the opening 2122a. That is to say, the wall portion 2121 is the bottom wall of the casing 2122 arranged opposite to the end cover 2123 in the first direction X. That is, the bottom wall of the casing 2122 is welded to the first connecting part 231 of the current collector component 23 or the electrode lead-out part 211 is insulated and installed on the bottom wall of the casing 2122.

The casing 2122 includes integrally formed side wall and wall portion 2121, that is, the casing 2122 is made using an integral forming process, such as stamping, casting, or extrusion molding, that is to say, the side wall and wall portion 2121 of the casing 2122 are an integral structure.

By setting the wall portion 2121 as one wall of the casing 2122 opposite to the end cover 2123, the battery cell 20 using this structure can keep the current collector component 23 and other components away from the end cover 2123, and there is no direct connection between the wall portion 2121 and the end cover 2123, thereby avoiding the phenomenon of force generated by the current collector component 23 and other components pulling or twisting the electrode lead-out part 211 acting on the end cover 2123, reducing the risk of connection failure between the end cover 2123 and the casing 2122, and further reducing the risk of electrolyte leakage of the battery cell 20 during use.

According to some embodiments of the present disclosure, the present disclosure also provides a battery 100, including the battery cells 20 in any one of the above solutions.

In some embodiments, as shown in FIG. 2, the battery 100 may further include a box 10 for accommodating battery cells 20.

In the above, the box 10 is used to provide assembly space for the battery cell 20, and the box 10 can be of various structures. The box 10 may include a first box body 11 and a second box body 12, with the first box body 11 and the second box body 12 covering each other. The first box body 11 and the second box body 12 jointly define an assembly space for accommodating the battery cell 20. The second box body 12 can be in a hollow structure with an opening at one end, the first box body 11 can be in a plate-shaped structure, and the first box body 11 is covered on the opening side of the second box body 12 to jointly define the assembly space by the first box body 11 and the second box body 12. The first box body 11 and the second box body 12 can also both be in hollow structure with an opening on one side, and the opening side of the first box body 11 is covered on the opening side of the second box body 12. Of course, the box 10 formed by the first box body 11 and the second box body 12 can be of various shapes, such as cylinder, cuboid, etc. As an example, in FIG. 2, the box 10 is in a shape of cuboid.

For example, as shown in FIG. 2, the battery 100 can include multiple battery cells 20, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for connecting the multiple battery cells 20 for achieving electrical connection between multiple battery cells 20.

According to some embodiments of the present disclosure, the present disclosure also provides an electrical equipment, including a battery 100 in any one of the above solutions, and the battery 100 is used to provide electrical energy to the electrical equipment.

The electrical equipment can be any of the aforementioned equipment or systems that use battery 100.

According to some embodiments of the present disclosure, as shown in FIGS. 3 to 8, the present disclosure provides a battery cell 20, which includes a shell assembly 21, an electrode assembly 22, and a current collector component 23. The shell assembly 21 has an electrode lead-out part 211 for inputting or outputting electrical energy. The shell assembly 21 includes a shell 212, which has a wall portion 2121 as the electrode lead-out part 211. The shell 212 includes a casing 2122 and an end cover 2123. The interior of the casing 2122 forms an accommodating cavity with an opening 2122a, and the end cover 2123 closes the opening 2122a. The end cover 2123 is the wall portion 2121. A convex part 2121a is formed on the side of the wall portion 2121 facing the interior of the shell 212, and a concave part 2121b is formed on the side of the wall portion 2121 facing away from the interior of the shell 212 and corresponding to the position of the convex part 2121a. The electrode assembly 22 is accommodated in the accommodation cavity of the casing 2122. The electrode assembly 22 includes a main body part 221 and a tab 222. The main body part 221 is cylindrical and the tab 222 is connected to one end of the main body part 221 facing the wall portion 2121 along the first direction X. The material of the tab 222 is different from that of the wall portion 2121. The current collector component 23 is arranged inside the shell 212, and includes a first connecting part 231 made of the same material as the wall portion 2121 and a second connecting part 232 made of the same material as the tab 222. The first connecting part 231 is connected to the second connecting part 232, and along the first direction X, the first connecting part 231 and the second connecting part 232 are stacked between the wall portion 2121 and the tab 222. The first connecting part 231 is located on the side of the second connecting part 232 facing the electrode lead-out part 211. The first connecting part 231 is welded to the convex part 2121a of the wall portion 2121, and the second connecting part 232 is welded to the tab 222. Both the first connecting part 231 and the second connecting part 232 are disk structures, and the first connecting part 231 and the second connecting part 232 are coaxially arranged and have the same radius. The first connecting part 231 is provided with a first through hole 2311 extending along the first direction X, and the second connecting part 232 forms a connecting area 2321 welded to the tab 222 in the area corresponding to the first through hole 2311. The second connecting part 232 is provided with a second through hole 2322 extending along the first direction X. The first through hole 2311 and the second through hole 2322 are coaxially arranged, and the radius of the first through hole 2311 is larger than that of the second through hole 2322. The first connecting part 231 is welded to the second connecting part 232 to form a first welding mark 233, the first connecting part 231 is welded to the electrode lead-out part 211 to form a second welding mark 24, and the second connecting part 232 is welded to the tab 222 to form a third welding mark 25. Along the first direction X, the projections of the first welding mark 233, the second welding mark 24, and the third welding mark 25 in a plane perpendicular to the first direction X do not overlap.

It should be noted that in the absence of conflicts, the embodiments and the features in the embodiments in the present disclosure can be combined with each other.

The above is only preferred embodiments of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A battery cell, comprising:
a shell assembly, comprising an electrode lead-out part for inputting or outputting electrical energy;
an electrode assembly, housed within the shell assembly, and comprising a main body part and a tab, wherein the tab is connected to the main body part, and a material of the tab is different from that of the electrode lead-out part; and
a current collector component, arranged inside the shell assembly, and comprising a first connecting part made of the same material as the electrode lead-out part and a second connecting part made of the same material as the tab, wherein the first connecting part is connected to the second connecting part, the first connecting part is welded to the electrode lead-out part, and the second connecting part is welded to the tab.

2. The battery cell according to claim 1, wherein along a first direction, the current collector component is arranged between the main body part and the electrode lead-out part,
wherein along the first direction, the first connecting part is stacked with the second connecting part, and the first connecting part is located on a side of the second connecting part facing the electrode lead-out part.

3. The battery cell according to claim 2, wherein along the first direction, the tab is provided on one side of the main body part facing the second connecting part.

4. The battery cell according to claim 2 or 3, wherein along the first direction, the second connecting part has a connecting area that is not covered by the first connecting part, and the connecting area is welded to the tab.

5. The battery cell according to claim 4, wherein the first connecting part is provided with a first through hole, wherein the first through hole penetrates through both sides of the first connecting part in the first direction, and the second connecting part forms the connecting area corresponding to an area of the first through hole.

6. The battery cell according to claim 5, wherein the connecting area is provided with a second through hole communicated with the first through hole, wherein the second through hole penetrates through both sides of the second connecting part in the first direction, and an aperture of the second through hole is smaller than that of the first through hole.

7. The battery cell according to claim 5 or 6, wherein an outer peripheral surface of the first connecting part is flush with an outer peripheral surface of the second connecting part.

8. The battery cell according to claim 4, wherein the connecting area surrounds an outer side of a projection of the first connecting part along the first direction on the second connecting part.

9. The battery cell according to claim 8, wherein the first connecting part is provided with a first through hole that passes through both sides of the first connecting part in the first direction, and the second connecting part is provided with a second through hole that passes through both sides of the second connecting part in the first direction, wherein the first through hole is communicated with the second through hole.

10. The battery cell according to claim 9, wherein the first through hole and the second through hole are coaxially arranged and have the same radius.

11. The battery cell according to any one of claims 2-10, wherein both the first connecting part and the second connecting part are disk structures, and the first connecting part and the second connecting part are coaxially arranged.

12. The battery cell according to claim 1, wherein along a first direction, the current collector component is arranged between the main body part and the electrode lead-out part; and
the first connecting part surrounds an outer side of the second connecting part, and an inner peripheral surface of the first connecting part is connected to an outer peripheral surface of the second connecting part; or
the second connecting part surrounds an outer side of the first connecting part, and an inner peripheral surface of the second connecting part is connected to an outer peripheral surface of the first connecting part.

13. The battery cell according to any one of claims 1-12, wherein the first connecting part is welded to the second connecting part to form a first welding mark, and the first connecting part is welded to the electrode lead-out part to form a second welding mark; and
along a first direction, the current collector component is arranged between the main body part and the electrode lead-out part, and projections of the first welding mark and the second welding mark in a plane perpendicular to the first direction do not overlap.

14. The battery cell according to claim 13, wherein the second welding mark surrounds an outer side of the first welding mark.

15. The battery cell according to any one of claims 1-14, wherein the first connecting part is welded to the second connecting part to form a first welding mark, and the second connecting part is welded to the tab to form a third welding mark; and
along a first direction, the current collector component is arranged between the main body part and the electrode lead-out part, and projections of the first welding mark and the third welding mark in a plane perpendicular to the first direction do not overlap.

16. The battery cell according to any one of claims 1-15, wherein the main body part is cylindrical.

17. The battery cell according to any one of claims 1-16, wherein the shell assembly comprises a shell, and the electrode assembly is accommodated inside the shell,
wherein the shell has a wall portion, and the wall portion is the electrode lead-out part.

18. The battery cell according to claim 17, wherein a convex part is formed on a side of the wall portion facing the electrode assembly, and a concave part is formed on a side of the wall portion facing away from the electrode assembly and corresponding to a position of the convex part, wherein the convex part is connected to the first connecting part.

19. The battery cell according to any one of claims 1-16, wherein the shell assembly further comprises a shell, and the electrode assembly is accommodated inside the shell,
wherein the shell has a wall portion, and the electrode lead-out part is provided on the wall portion in an insulating manner.

20. The battery cell according to any one of claims 17-19, wherein the shell comprises:
a casing, wherein an accommodating cavity with an opening is formed inside the casing, and the electrode assembly is accommodated in the accommodating cavity; and
an end cover, closing the opening, wherein
the end cover is the wall portion.

21. The battery cell according to any one of claims 17-19, wherein the shell comprises:
a casing, comprising an integrally formed side wall and the wall portion, wherein the side wall surrounds the wall portion, one end of the side wall is connected to the wall portion, and the other end of the side wall forms an opening opposite to the wall portion, wherein the side wall and the wall portion together define the accommodating cavity for accommodating the electrode assembly; and
an end cover, closing the opening.

22. A battery, comprising the battery cell according to any one of claims 1-21.

23. An electrical equipment, comprising the battery according to claim 22.
